# EUROPEAN PATENT APPLICATION

(11) **EP 4 836 166 A1**
(43) Date of publication of application: **04.11.2026**
(21) Application number: 26158755.4
(22) Date of filing: 16.02.2026
(51) Int. Cl.: H01M 50/519, H01M 10/42, H01M 50/284, H01M 50/507, H01M 50/536

(54) **METHOD FOR REPLACING THE CIRCUIT BOARD OF A BATTERY ASSEMBLY AND BATTERY ASSEMBLY**

(30) Priority: 02.05.2025 KR 20250058556
(71) Applicant: SAMSUNG SDI CO., LTD., Yongin-si, Gyeonggi-do 17084 (KR)
(72) Inventor: Ahn, Janggun, 17084 Yongin-si, Gyeonggi-do (KR)
(74) Representative: Meissner Bolte Partnerschaft mbB

(57) **Abstract**

A method for replacing a circuit board (350, 410, 510, 710, 1010) of a battery assembly (300) includes: cutting a plurality of first tabs (542, 740, 1040) to separate a first circuit board from a plurality of bus bars (340, 420, 520, 720, 1020); preparing a second circuit board (710, 1010) connected to a plurality of second tabs (544, 750, 1050); and connecting the plurality of second tabs (544, 750, 1050) to the plurality of bus bars (340, 420, 520, 720, 1020). Each of the plurality of second tabs (544, 750, 1050) is on a corresponding one of the plurality of cut first tabs (542, 740, 1040) in a thickness direction.

## Description

Aspects of embodiments of the present invention relate to a method for replacing a circuit board of a battery assembly, and the battery assembly.

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A battery module may include a plurality of secondary batteries (or cells) connected in series and/or in parallel, a plurality of bus bars connected to the plurality of secondary batteries, and a circuit board welded to the bus bars. The circuit board may include a fuse for safety of the battery module. If the fuse is damaged by a high voltage inside or outside the battery module, it may be difficult to replace the damaged circuit board since the circuit board may be welded to the bus bars.

The above information disclosed in this Background section is for enhancement of understanding of the background of the present invention, and therefore, it may contain information that does not constitute related (or prior) art.

Embodiments of the present invention are directed to a method for replacing a circuit board of a battery assembly, and a battery assembly to which a circuit board may be easily replaced.

These and other aspects and features of the present invention will be described in or will be apparent from the following description of embodiments of the present invention.

According to one or more embodiments of the present invention, a method for replacing a circuit board of a battery assembly includes: cutting a plurality of first tabs to separate a first circuit board from a plurality of bus bars; preparing a second circuit board connected to a plurality of second tabs; and connecting the plurality of second tabs to the plurality of bus bars. Each of the plurality of second tabs is on a corresponding one of the plurality of cut first tabs in a thickness direction.

In an embodiment, each of the plurality of cut first tabs may include a coupling portion coupled to at least a portion of an upper surface of a corresponding one of the plurality of bus bars.

In an embodiment, each of the plurality of cut first tabs may include a breaking portion that may be cut to separate the plurality of bus bars and the circuit board from each other.

In an embodiment, the breaking portion may be located between the first circuit board and the plurality of bus bars before being cut.

In an embodiment, the breaking portion may include a breaking hole.

In an embodiment, a cut surface of each of the plurality of cut first tabs may be coated for protection.

In an embodiment, each of the plurality of first tabs may include a first through hole, each of the plurality of second tabs may include a second through hole, each of the plurality of bus bars may include a third through hole, and the connecting of the plurality of second tabs to the plurality of bus bars may include: fastening a fastening member through the first through hole, the second through hole, and the third through hole to connect the plurality of second tabs to the plurality of bus bars.

In an embodiment, the fastening member may include: a head portion; and a protruding portion protruding from the head portion and inserted into the first through hole, the second through hole, and the third through hole. A diameter of the head portion may be smaller than a width of each of the second tabs.

In an embodiment, the fastening member may include a conductive material.

In an embodiment, each of the plurality of bus bars may include a fixing groove fixing end portions of a corresponding one of the plurality of first tabs and a corresponding one of the plurality of second tabs.

In an embodiment, one end of each of the plurality of second tabs may be connected to the second circuit board, and the connecting of the plurality of second tabs to the plurality of bus bars may include inserting another end of each of the plurality of second tabs into the fixing groove of a corresponding one of the plurality of bus bars.

In an embodiment, the other end of each of the plurality of second tabs may be bent and inserted into the fixing groove of the corresponding one of the plurality of bus bars.

In an embodiment, at least some of the plurality of first tabs or the plurality of second tabs may include nickel tabs.

In an embodiment, the connecting of the plurality of second tabs to the plurality of bus bars may include: electrically connecting each of the plurality of second tabs to an upper surface of a corresponding one of the plurality of cut first tabs.

According to one or more embodiments of the present invention, a battery assembly includes: a plurality of battery cells; a plurality of bus bars electrically connecting the plurality of battery cells to each other; a circuit board electrically connected to the plurality of bus bars; a plurality of first tabs on the plurality of bus bars in a thickness direction; and a plurality of second tabs on the plurality of first tabs in the thickness direction, and connecting the plurality of bus bars and the circuit board to each other.

In an embodiment, each of the plurality of first tabs may include a coupling portion coupled to at least a portion of an upper surface of a corresponding one of the plurality of bus bars.

In an embodiment, each of the plurality of first tabs may include a first through hole, each of the plurality of second tabs may include a second through hole, each of the plurality of bus bars may include a third through hole, and the battery assembly may further include a fastening member fastened through the first through hole, the second through hole, and the third through hole to connect the plurality of second tabs to the plurality of bus bars.

In an embodiment, each of the plurality of bus bars may include a fixing groove fixing end portions of a corresponding one of the plurality of first tabs and a corresponding one of the plurality of second tabs, one end of each of the plurality of second tabs may be connected to the circuit board, and another end of each of the plurality of second tabs may be inserted into the fixing groove of a corresponding one of the plurality of bus bars.

According to one or more embodiments of the present invention, a battery assembly includes: a plurality of battery cells; a plurality of bus bars electrically connecting the plurality of battery cells to each other; a circuit board electrically connected to the plurality of bus bars; and a plurality of tabs on the plurality of bus bars in a thickness direction. Each of the plurality of tabs includes: a coupling portion coupled to at least a portion of an upper surface of a corresponding one of the plurality of bus bars; and a through hole coupling a fastening member to the corresponding one of the plurality of bus bars.

In an embodiment, each of the plurality of bus bars may include a fixing groove fixing end portions of corresponding ones of the plurality of tabs, one end of each of the plurality of tabs may be connected to the circuit board, and another end of each of the plurality of tabs may be inserted into the fixing groove of the corresponding one of the plurality of bus bars.

According to some embodiments of the present invention, bus bars and tabs may be connected to each other through different connection methods. Accordingly, the tabs and the bus bars may be firmly coupled to each other.

According to some embodiments of the present invention, without removing all of existing first tabs, second tabs connected to a replaced circuit board may be disposed on an upper side of the first tabs. In addition, by connecting the second tabs and bus bars to each other, the circuit board and the bus bars may be electrically connected to each other. Accordingly, a damaged circuit board of a battery assembly may be easily replaced.

However, aspects and features of the present invention are not limited to those described above, and other aspects and features not mentioned will be clearly understood by a person skilled in the art from the detailed description, described below.

The following drawings attached to this specification illustrate embodiments of the present invention, and further describe aspects and features of the present invention together with the detailed description of the present invention. Thus, the present invention should not be construed as being limited to the drawings.
FIG. 1 illustrates an example of a battery cell according to some embodiments of the present invention.
FIG. 2 is a cross-sectional view illustrating an example of a battery cell according to some embodiments of the present invention.
FIG. 3 is an exploded perspective view illustrating an example of a portion of a battery assembly according to some embodiments of the present invention.
FIG. 4 illustrates an example of a bus bar and a circuit board that are connected to each other according to some embodiments of the present invention.
FIG. 5 illustrates an example of a breaking portion of a tab according to some embodiments of the present invention.
FIG. 6 illustrates an example of a tab that is broken, and a circuit board that is separated from a bus bar according to some embodiments of the present invention.
FIG. 7 is a perspective view illustrating an example of a bus bar and a circuit board that are connected to each other according to some embodiments of the present invention.
FIG. 8 is a plan view illustrating an example of a bus bar and a circuit board that are connected to each other according to some embodiments of the present invention.
FIG. 9 is a cross-sectional view illustrating an example of a bus bar and a circuit board that are connected to each other according to some embodiments of the present invention.
FIG. 10 illustrates an example of a bus bar and a circuit board that are connected to each other according to some embodiments of the present invention.
FIG. 11 is a flowchart illustrating an example of a method for replacing a circuit board of a battery assembly according to some embodiments of the present invention.

Hereinafter, embodiments of the present invention will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when a layer or element is referred to as being "between" two layers, it can be the only layer between the two layers, or one or more intervening layers may also be present. It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of local patent laws.

References to two compared elements, features, etc. as being "the same" may mean that they are "substantially the same." Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

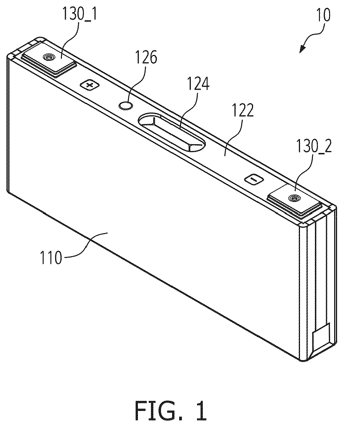

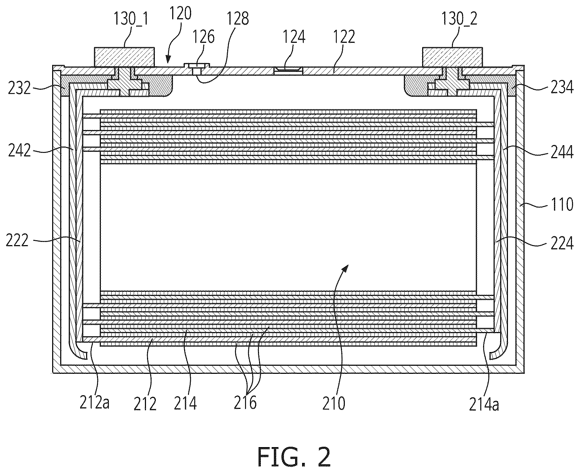

FIG. 1 illustrates an example of a battery cell 10 according to some embodiments of the present invention. FIG. 2 is a cross-sectional view illustrating an example of the battery cell 10 according to some embodiments of the present invention.

Referring to FIGS. 1 and 2, the battery cell 10 according to the present embodiment may include at least one electrode assembly 210 wound with a separator 216 as an insulator between a positive electrode 212 and a negative electrode 214, a case 110 accommodating the electrode assembly 210 therein, and a cap assembly 120 coupled to an opening of the case 110.

The battery cell 10 according to one or more embodiments of the present invention may include at least one electrode assembly 210 wound with a separator 216 as an insulator between the positive electrode 212 and the negative electrode 214, a case 110 in which the electrode assembly 210 is received (or accommodated) therein, and a cap assembly 120 coupled to an opening of the case 110.

The battery cell 10 according to one or more embodiments will now be described as an example of a prismatic lithium ion secondary battery. However, the present invention is not limited thereto, and suitable aspects, features and principles described herein may be applied to various other types of batteries, such as pouch-type batteries and/or cylindrical batteries.

Each of the positive electrode 212 and the negative electrode 214 may include a current collector made of a thin metal foil having a coated portion on which an active material is coated and an uncoated portion 212a, 214a on which an active material is not coated.

The positive electrode 212 and the negative electrode 214 are wound after interposing the separator 216, which is an insulator, therebetween. However, the present invention is not limited thereto, and the electrode assembly 210 may have a structure in which a positive electrode 212 and a negative electrode 214, each made of a plurality of sheets, are alternately stacked with a separator interposed therebetween.

The case 110 may form the overall outer appearance of the battery cell 10 and may be made of a conductive metal, such as aluminum, aluminum alloy, or nickel-plated steel. In addition, the case 110 may provide a space in which the electrode assembly 210 is accommodated.

The cap assembly 120 may include a cap plate 122 covering an opening in the case 110, and the case 110 and the cap plate 122 may be made of a conductive material. The positive and negative electrode terminals 130_1 and 130_2 electrically connected to the positive electrode 212 and the negative electrode 214, respectively, may be installed to penetrate (or extend through) the cap plate 122 and protrude outwardly therethrough.

In addition, outer peripheral surfaces (e.g., circumferential surfaces) of upper pillars of the positive and negative electrode terminals 130_1 and 130_2 protruding outwardly from the cap plate 122 may be threaded and may be fixed to the cap plate 122 by utilizing nuts.

However, the present invention is not limited thereto, and the positive and negative electrode terminals 130_1 and 130_2 may have a rivet structure and may be riveted or welded to the cap plate 122.

In addition, the cap plate 122 may be made of a thin plate and may be coupled to the opening in the case 110, and an electrolyte injection port 128 into which a sealing stopper 126 may be installed may be located (e.g., formed) in the cap plate 122, and a vent portion 124 having a notch may be installed.

The positive and negative electrode terminals 130_1 and 130_2 may be electrically connected to current collectors including first and second current collectors 222 and 224 (hereinafter referred to as positive and negative current collectors) by being bonded or coupled (e.g., by welding) to the positive uncoated portion 212a and the negative electrode uncoated portion 214a, respectively.

For example, the positive and negative electrode terminals 130_1 and 130_2 may be coupled by welding to the positive and negative electrode current collectors 222 and 224, respectively. However, the present invention is not limited thereto, and the positive and negative electrode terminals 130_1 and 130_2 and the positive and negative electrode current collectors 222 and 224 may be integrally formed in one or more embodiments.

In addition, an insulation member may be installed between the electrode assembly 210 and the cap plate 122. The insulation member may include first and second insulation members 232 and 234, and each of the first and second insulation members 232 and 234 may also have a portion located between the electrode assembly 210 and the case 110.

In addition, according to one or more embodiments of the present invention, one end of a separation member may face one side of the electrode assembly 210 and may be installed between the insulation member and the positive or negative electrode terminals 130_1 and 130_2. In one or more embodiments, the separation member may include first and second separation members 242 and 244.

Accordingly, the positive and negative electrode terminals 130_1 and 130_2, which may be coupled by welding to the positive and negative electrode current collectors 222 and 224, may be coupled to first ends of the first and second insulation members 232 and 234 and the first and second separation members 242 and 244.

The battery cell 10 may be a lithium battery cell, a sodium battery cell, or the like. However, the present invention is not limited thereto, and the battery cell 10 may be or include all suitable kinds of batteries capable of repeatedly providing electricity by charging and discharging. In some embodiments, if (e.g., when) the battery cell 10 is a lithium battery cell, it may be used in electric vehicles (EVs) due to having excellent lifespan characteristics and high-rate characteristics. For example, lithium battery cells may be used in hybrid vehicles, such as plug-in hybrid electric vehicles (PHEVs). In addition, lithium battery cells may be used in various suitable fields requiring or desiring large-scale power storage. For example, lithium battery cells may be used in electric bicycles, power tools, and energy storage systems (ESS).

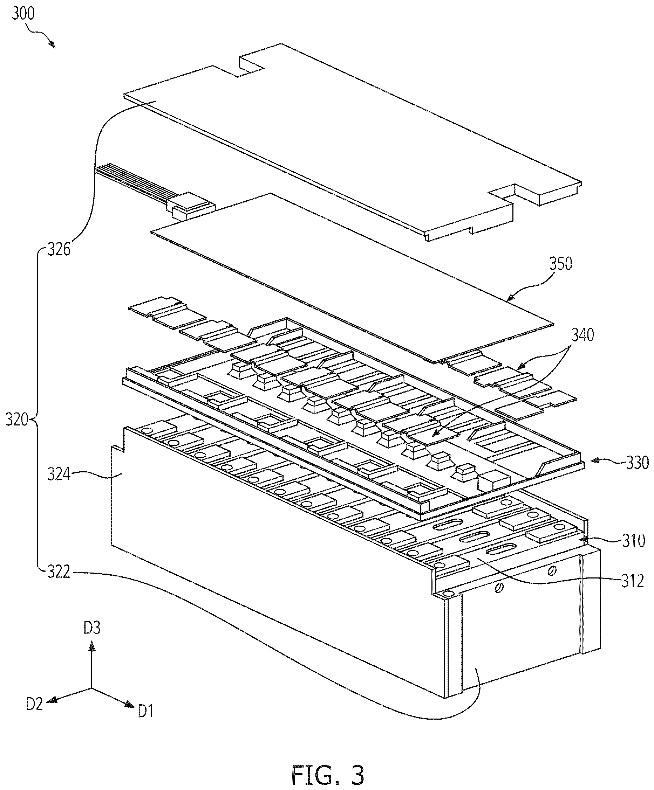

FIG. 3 is an exploded perspective view illustrating an example of a portion of a battery assembly 300 according to some embodiments of the present invention.

Referring to FIG. 3, the battery assembly 300 according to an embodiment of the present invention may include a plurality of battery cells 310 (e.g., the battery cell 10 of FIG. 1), a frame 320 accommodating the plurality of battery cells 310, a plurality of bus bars 340 electrically connected to the plurality of battery cells 310, a bus bar holder 330 supporting the plurality of bus bars 340, and a circuit board 350 electrically connected to the plurality of bus bars 340 and mounted with various circuits and components. The plurality of battery cells 310 may be arranged along one direction, such that wide surfaces of the battery cells 310 face each other.

In some embodiments, each battery cell 310 may include a case, an electrode assembly received in the case together with an electrolyte, and a cap plate 312 for sealing the case. A negative electrode tab and a positive electrode tab connected to the electrode assembly may be electrically connected to a negative electrode terminal and a positive electrode terminal formed in the cap plate 312. Also, the negative and positive electrode terminals formed in the cap plate 312 may be electrically connected to the plurality of bus bars 340. However, the structure of the battery cell 310 is not limited thereto, and may be variously and appropriately modified as needed or desired. In addition, the number and the arrangement of the battery cells 310 are not limited to the structure illustrated in FIG. 3, and may be variously and appropriately modified as needed or desired.

In some embodiments, the plurality of battery cells 310 may be accommodated in the frame 320. According to some embodiments, the frame 320 may include a pair of end plates 322, a pair of side plates 324, and a top plate 326. The frame 320 may contact outermost battery cells 310 in the direction of arrangement (e.g., the D1 direction) of the battery cells 310. The pair of side plates 324 may be positioned in a direction perpendicular to or substantially perpendicular to the arrangement direction of the battery cells 310 (e.g., the D2 direction), and may be coupled orthogonally to the end plates 322. The top plate 326 may be disposed above the circuit board 350 (e.g., in the D3 direction). A bottom plate may be provided below the battery cells 310 to support the battery cells 310 from below. The frame 320 may accommodate the plurality of battery cells 310, the bus bar holder 330, the plurality of bus bars 340, and the circuit board 350.

In some embodiments, the bus bar holder 330 may be disposed above the cap plate 312 as illustrated in FIG. 3, and may support the plurality of bus bars 340. For example, the bus bar holder 330 may be a rectangular or substantially rectangular plate member, and may be made of an insulating material.

In some embodiments, the bus bar holder 330 may include a plurality of through holes through which the positive and negative electrode terminals of the cap plate 312 are exposed. The positive and negative electrode terminals may be exposed through the through holes formed in the bus bar holder 330, and each of the exposed positive and negative electrode terminals may be electrically connected to the plurality of bus bars 340.

In some embodiments, each bus bar 340 may electrically connect corresponding positive and/or negative electrode terminals to each other. The bus bar 340 may connect the plurality of battery cells 310 in series and/or in parallel with each other. As such, a plurality of bus bars 340 may be provided. According to some embodiments, the bus bar 340 may electrically connect a positive electrode terminal of a battery cell 310 and a positive or negative electrode terminal of another battery cell 310 to each other. Additionally or as another example, the bus bar 340 may electrically connect a negative electrode terminal of a battery cell 310 and a positive or negative electrode terminal of another battery cell 310 to each other. The bus bar 340 may be connected to the positive and/or negative electrode terminals by welding or the like. Regions of the battery cells 310 other than the positive and negative electrode terminals may be insulated from the bus bar 340 by the bus bar holder 330. The circuit board 350 may be interposed between the bus bar 340 and the top plate 326, and the bus bar 340 may be electrically connected to the circuit board 350.

In some embodiments, the circuit board 350 may be mounted with various suitable components for measuring state information of the battery cells 310, such as voltage and/or temperature, and various components or circuits for controlling and/or managing the battery cells 310. According to some embodiments, the circuit board 350 may include a battery management system (BMS). In addition, the circuit board 350 may be electrically connected to the outside of the battery assembly 300 through a separate connector.

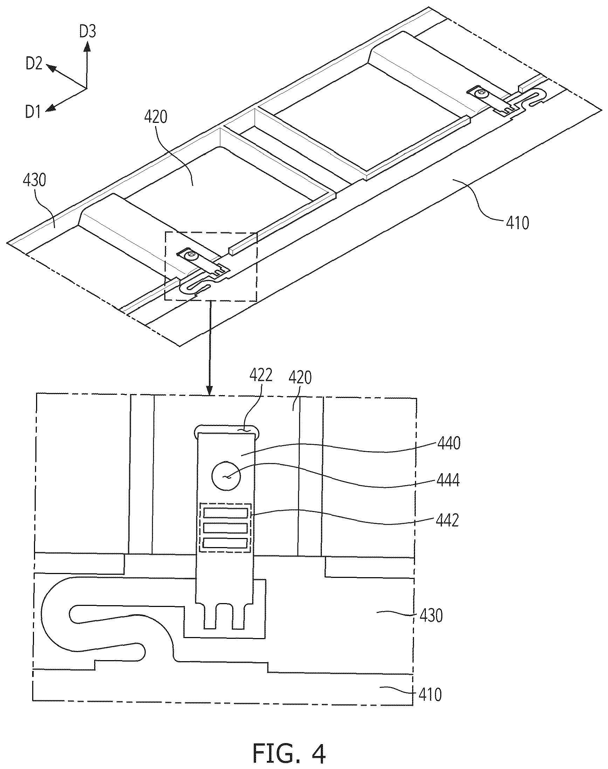

In some embodiments, the circuit board 350 may be located above the bus bar holder 330. Additionally, the circuit board 350 may be electrically connected to the plurality of bus bars 340 through a plurality of tabs. Examples of the connection between the plurality of bus bars 340 and the circuit board 350 through the plurality of tabs will be described in more detail below with reference to FIGS. 4 to 10.

FIG. 4 illustrates an example of a bus bar 420 and a circuit board 410 that are connected to each other according to some embodiments of the present invention.

Referring to FIG. 4, in some embodiments, a battery assembly (e.g., the battery assembly 300 of FIG. 3) may include a plurality of battery cells, a circuit board 410 to measure information associated with the plurality of battery cells or to control and/or manage the plurality of battery cells, a plurality of bus bars 420 to electrically connect the plurality of battery cells to each other, a bus bar holder 430 for supporting the plurality of bus bars 420, and a plurality of tabs 440 connecting the circuit board 410 and each of the plurality of bus bars 420 to each other. The circuit board 410 may be electrically connected to the plurality of bus bars 420 through the plurality of tabs 440. The tab 440 may include a nickel tab, but the present invention is not limited thereto.

In some embodiments, the tab 440 may be disposed above the bus bar 420 (e.g., in the D3 direction). In more detail, the tab 440 may include a coupling portion 442 that is coupled to at least a portion of an upper surface of the bus bar 420. The coupling portion 442 may be coupled to at least a portion of the upper surface of the bus bar 420 by ultrasonic welding or the like.

In some embodiments, the tab 440 may include a through hole 444 into which a fastening member to be connected to the bus bar 420 may be inserted. In addition, the bus bar 420 may include a through hole at a position corresponding to (e.g., overlapping with) the through hole 444 of the tab 440. The fastening member may include a head portion, and a protruding portion that protrudes from the head portion and is inserted into the through hole 444 of the tab 440 and the through hole of the bus bar 420. For example, the fastening member may be a rivet, but the present invention is not limited thereto. Additionally, the fastening member may include a conductive material.

In some embodiments, the bus bar 420 may include a fixing groove 422 that fixes an end portion of the tab 440. In this case, one end of the tab 440 may be connected to the circuit board 410, and another end (e.g., an opposite end) of the tab 440 may be inserted into the fixing groove 422 of the bus bar 420. For example, the other end of the tab 440 may be bent and inserted into the fixing groove 422 of the bus bar 420.

As such, the bus bar 420 and the tab 440 may be connected to each other through different connection methods. Accordingly, the tab 440 and the bus bar 420 may be firmly coupled to each other.

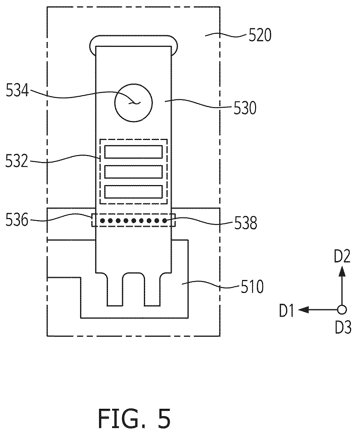

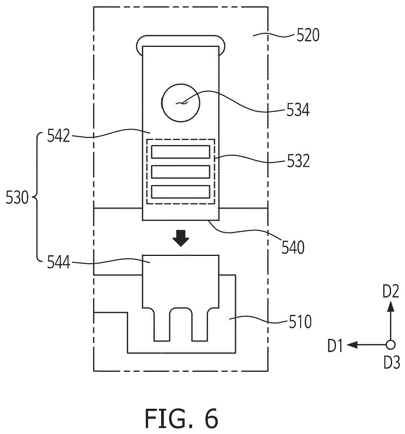

FIG. 5 illustrates an example of a breaking portion 536 of a tab 530 according to some embodiments of the present invention. FIG. 6 illustrates an example of the tab 530 that is broken, and a circuit board 510 that is separated from a bus bar 520 according to some embodiments of the present invention.

Referring to FIGS. 5 and 6, in some embodiments, a battery assembly (e.g., the battery assembly 300 of FIG. 3) may include a plurality of battery cells, a circuit board 510 to measure information associated with the plurality of battery cells or to control and/or manage the plurality of battery cells, a plurality of bus bars 520 to electrically connect the plurality of battery cells to each other, and a plurality of tabs 530 connecting the circuit board 510 and each of the plurality of bus bars 520 to each other. The circuit board 510 may be electrically connected to the plurality of bus bars 520 through the plurality of tabs 530.

In some embodiments, the tab 530 may be disposed above the bus bar 520 (e.g., in the D3 direction). In more detail, the tab 530 may include a coupling portion 532 coupled to at least a portion of the upper surface of the bus bar 520, and a through hole 534 into which a fastening member to be connected to the bus bar 520 may be inserted. The coupling portion 532 may be coupled to at least a portion of the upper surface of the bus bar 520 by ultrasonic welding or the like. In addition, the bus bar 520 and the tab 530 may be coupled to each other by the fastening member fastened through the through hole 534.

In some embodiments, the tab 530 may include a breaking portion 536 that may be cut to separate the bus bar 520 and the circuit board 510 from each other. In more detail, the breaking portion 536 may be disposed on the tab 530 between the circuit board 510 and the bus bar 520. The breaking portion 536 may include a plurality of breaking holes 538. The plurality of breaking holes 538 may be arranged along a direction perpendicular to or substantially perpendicular to the longitudinal direction of the tab 530. Accordingly, the breaking portion 536 may be broken (e.g., may be easily broken) along the plurality of breaking holes 538.

In some embodiments, referring to FIG. 6, the tab 530 may be cut and separated at approximately the breaking portion 536. In this case, a first tab 542 of the tab 530 coupled to the bus bar 520 may remain coupled to the bus bar 520. On the other hand, a second tab 544 of the tab 530 connected to the circuit board 510 may be separated from the bus bar 520 together with the circuit board 510. The first tab 542 coupled to the bus bar 520 may include the coupling portion 532 and the through hole 534.

In some embodiments, a cut surface 540 of the cut tab 530 may be coated for protection. In more detail, the cut surface 540 may be coated using various suitable resins, such as an epoxy, polyurethane, or silicone, but the present invention is not limited thereto. Accordingly, accidents that may be caused by the cut surface 540 including a sharp edge may be prevented or substantially prevented.

In FIG. 5, the breaking portion 536 is illustrated to be cut through the plurality of breaking holes 538, but the present invention is not limited thereto. For example, the breaking portion 536 may be cut using a cutter.

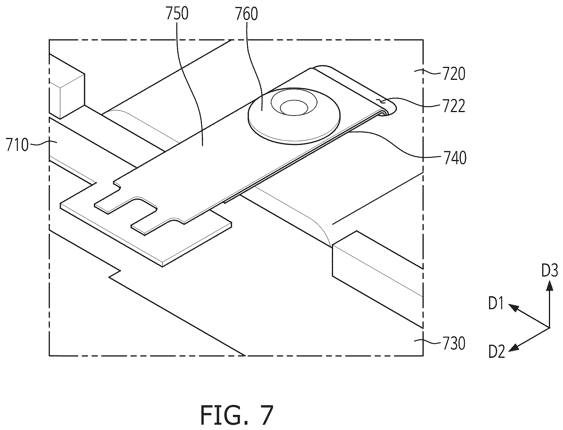

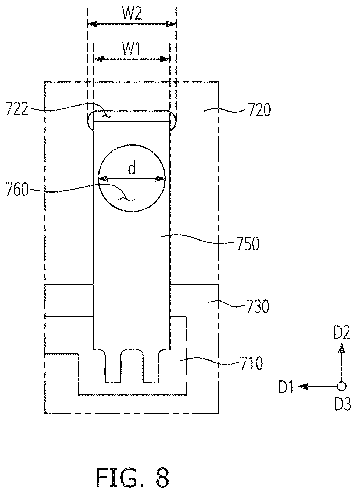

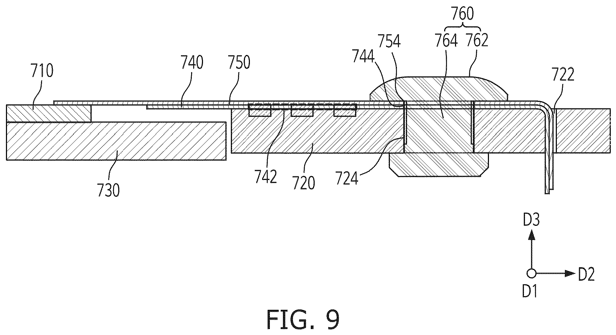

FIG. 7 is a perspective view illustrating an example of a bus bar 720 and a circuit board 710 that are connected to each other according to some embodiments of the present invention. FIG. 8 is a plan view illustrating an example of a bus bar 720 and a circuit board 710 that are connected to each other according to some embodiments of the present invention. FIG. 9 is a cross-sectional view illustrating an example of a bus bar 720 and a circuit board 710 that are connected to each other according to some embodiments of the present invention.

Referring to FIGS. 7 to 9, in some embodiments, a battery assembly may include a plurality of battery cells, a circuit board 710 to measure information associated with the plurality of battery cells or to control and/or manage the plurality of battery cells, a plurality of bus bars 720 to electrically connect the plurality of battery cells to each other, and a bus bar holder 730 for supporting the plurality of bus bars 720. The circuit board 710 may be electrically connected to the plurality of bus bars 720 through a tab.

In some embodiments, the circuit board 710 may be a replaced circuit board due to a fuse disconnection or a failure. In more detail, a first circuit board may be electrically connected to the bus bar 720 through a first tab 740. When a replacement is required or desired due to a fuse disconnection or a failure in the first circuit board, the first circuit board may be separated from the bus bar 720 as described above with reference to FIGS. 5 and 6. Thereafter, a second circuit board to be connected to a plurality of second tabs 750 may be prepared. The circuit board 710 illustrated in FIG. 7 may correspond to the second circuit board. In addition, the circuit board 710 may be connected to the bus bar 720 by the second tabs 750 that are connected to the bus bar 720.

In some embodiments, the second tab 750 may be disposed in a thickness direction (e.g., an upper side or the D3 direction) of the first tab 740. The first tab 740 illustrated in FIG. 7 may correspond to the first tab 542 that remains coupled to the bus bar 520 as described above with reference to FIG. 6. Referring to FIG. 9, the first tab 740 may include a coupling portion 742 coupled to at least a portion of an upper surface of the bus bar 720.

In some embodiments, the battery assembly may further include a fastening member 760 that connects the second tab 750 and the bus bar 720 to each other. In more detail, referring to FIG. 9, the first tab 740 may include a first through hole 744, the second tab 750 may include a second through hole 754 corresponding to (e.g., overlapping with) the first through hole 744, and the bus bar 720 may include a third through hole 724 corresponding to (e.g., overlapping with) the first through hole 744 and the second through hole 754. In this case, the fastening member 760 may connect the second tab 750 to the bus bar 720 by being fastened through the first through hole 744, the second through hole 754, and the third through hole 724.

In some embodiments, the fastening member 760 may include a head portion 762, and a protruding portion 764 protruding from the head portion 762 and inserted into the first through hole 744, the second through hole 754, and the third through hole 724. For example, the fastening member 760 may be a rivet, but the present invention is not limited thereto. Referring to FIG. 8, a diameter d of the head portion 762 may be smaller than a width W1 of the second tab 750.

In some embodiments, the fastening member 760 may include a conductive material. In other embodiments, the fastening member 760 may include a nonconductive material. In this case, the circuit board 710 and the bus bar 720 may be electrically connected to each other through the second tab 750 and the first tab 740 in contact with the second tab 750. The first tab 740 and/or the second tab 750 may include a nickel tab to reduce a contact resistance, but the present invention is not limited thereto.

In some embodiments, a method of connecting the first tab 740 to the circuit board 710 and the bus bar 720 and a method of connecting the second tab 750 to the circuit board 710 and the bus bar 720 may be different from each other. For example, the first tab 740 may be connected to the bus bar 720 by ultrasonic welding or the like, while being connected to the first circuit board before the replacement. On the other hand, the second tab 750 may be connected to the bus bar 720 by rivet fastening or the like, while being connected to the second circuit board (e.g., the circuit board 710) after replacement, and may be disposed on an upper side of the first tab 740.

In some embodiments, the bus bar 720 may include a fixing groove 722 to fix end portions of each of the first tab 740 and the second tab 750. In this case, one end of the second tab 750 may be connected to the circuit board 710. Referring to FIG. 8, a width W2 of the fixing groove 722 may be greater than the width W1 of the second tab 750.

In some embodiments, another end (e.g., an opposite end) of the second tab 750 may be bent and inserted into the fixing groove 722. Similarly, an end portion of the first tab 740 may also be bent and inserted into the fixing groove 722. In this case, because the first tab 740 is disposed below the second tab 750, the end portion of the first tab 740 may be bent more inward relative to a terminal of the second tab 750, and may be inserted into the fixing groove 722. Accordingly, a rotation of the second tab 750 to which the fastening member 760 is coupled may be prevented or substantially prevented.

The second tab connected to the replaced circuit board may be disposed on an upper side of the first tab without removing all of the existing first tabs. In addition, by connecting the second tab and the bus bar to each other, the circuit board and the bus bar may be electrically connected to each other. Accordingly, the damaged circuit board of the battery assembly may be replaced (e.g., may be easily replaced).

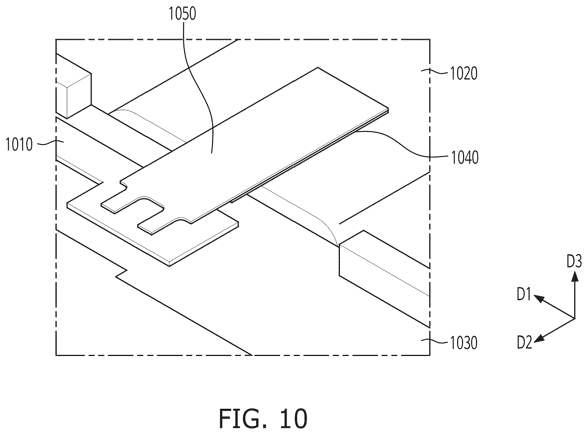

FIG. 10 illustrates an example of a bus bar 1020 and a circuit board 1010 that are connected to each other according to some embodiments of the present invention.

Referring to FIG. 10, in some embodiments, a battery assembly may include a plurality of battery cells, a circuit board 1010 to measure information associated with the plurality of battery cells or to control and/or manage the plurality of battery cells, a plurality of bus bars 1020 to electrically connect the plurality of battery cells to each other, and a bus bar holder 1030 for supporting the plurality of bus bars 1020. The circuit board 1010 may be electrically connected to the plurality of bus bars 1020 through a first tab 1040 and a second tab 1050.

In some embodiments, the circuit board 1010 may be a replaced circuit board due to a fuse disconnection or a failure. In more detail, a first circuit board may be electrically connected to the bus bar 1020 through the first tab 1040. When replacement is required or desired due to a fuse disconnection or a failure in the first circuit board, the first circuit board may be separated from the bus bar 1020 as described above with reference to FIGS. 5 and 6. Thereafter, a second circuit board to be connected to a plurality of second tabs 1050 may be prepared. The circuit board 1010 illustrated in FIG. 10 may correspond to the second circuit board. In addition, the circuit board 1010 may be connected to the bus bar 1020 by the second tab 1050 connected to the first tab 1040.

In some embodiments, the second tab 1050 may be disposed in a thickness direction (e.g., an upper side or the D3 direction) of the first tab 1040. The first tab 1040 illustrated in FIG. 10 may correspond to the first tab 542 that remains coupled to the bus bar 520 as described above with reference to FIG. 6. The second tab 1050 may be electrically connected to the first tab 1040 through an adhesive including a conductive material. At least some of the first tab 1040 or the second tab 1050 may include a nickel material, but the present invention is not limited thereto.

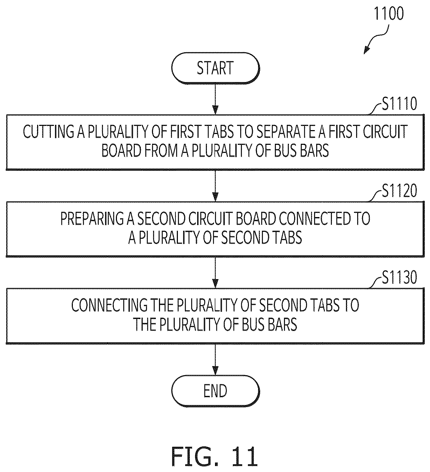

FIG. 11 is a flowchart illustrating an example of a method 1100 for replacing a circuit board of a battery assembly according to some embodiments of the present invention.

Referring to FIG. 11, in some embodiments, the method 1100 for replacing a circuit board of a battery assembly may start, and in response to a request to replace a first circuit board connected to a plurality of bus bars through a plurality of first tabs, the plurality of first tabs may be cut to separate the first circuit board from the plurality of bus bars (S1110). Each of the plurality of first tabs may include a coupling portion coupled to at least a portion of an upper surface of a corresponding one of the plurality of bus bars.

Thereafter, a second circuit board connected to a plurality of second tabs may be prepared (S1120). The plurality of second tabs may then be connected to the plurality of bus bars (S1130), and the method 1100 may end. Each of the plurality of second tabs may be disposed in a thickness direction (or an upper side) of a corresponding one of the plurality of cut first tabs. In more detail, each of the plurality of second tabs may be electrically connected to an upper surface of the corresponding one of the plurality of cut first tabs. Additionally, a cut surface of each of the plurality of cut first tabs may be coated for protection.

In some embodiments, each of the plurality of first tabs may include a breaking portion that is cut to separate the plurality of bus bars and the circuit board from each other. The breaking portion may be disposed between the first circuit board and the plurality of bus bars. In addition, the breaking portion may include a plurality of breaking holes.

In some embodiments, each of the plurality of first tabs may include a first through hole, and each of the plurality of second tabs may include a second through hole. In addition, each of the plurality of bus bars may include a third through hole. In this case, a fastening member may be fastened to the first through hole of each of the plurality of first tabs, the second through hole of each of the plurality of second tabs, and the third through hole of each of the plurality of bus bars to connect the plurality of second tabs to the plurality of bus bars.

In some embodiments, the fastening member may include a head portion, and a protruding portion protruding from the head portion and inserted into the first through hole of each of the plurality of first tabs, the second through hole of each of the plurality of second tabs, and the third through hole of each of the plurality of bus bars. A diameter of the head portion may be smaller than a width of the second tab. In addition, the fastening member may include a conductive material.

In some embodiments, each of the plurality of bus bars may include a fixing groove to fix end portions of the plurality of first tabs and the plurality of second tabs to each other. In addition, one end of each of the plurality of second tabs may be connected to the second circuit board. In this case, another end (e.g., an opposite end) of each of the plurality of second tabs may be inserted into the fixing groove of each of the plurality of bus bars. In more detail, the other end of each of the plurality of second tabs may be bent and inserted into the fixing groove of a corresponding one of the plurality of bus bars.

Although the present invention has been described above with respect to embodiments thereof, the present invention is not limited thereto. Various modifications and variations can be made thereto by those skilled in the art within the spirit of the present invention and the equivalent scope of the appended claims.

## Claims

1. A method for replacing a circuit board (350, 410, 510, 710, 1010) of a battery assembly (300), the method comprising:
cutting a plurality of first tabs (542, 740, 1040) to separate a first circuit board from a plurality of bus bars (340, 420, 520, 720, 1020);
preparing a second circuit board (710, 1010) connected to a plurality of second tabs (544, 750, 1050); and
connecting the plurality of second tabs (544, 750, 1050) to the plurality of bus bars (340, 420, 520, 720, 1020),
wherein each of the plurality of second tabs (544, 750, 1050) is on a corresponding one of the plurality of cut first tabs (542, 740, 1040) in a thickness direction.

2. The method as claimed in claim 1, wherein each of the plurality of cut first tabs (542, 740, 1040) comprises a coupling portion (442, 532, 742) coupled to at least a portion of an upper surface of a corresponding one of the plurality of bus bars (340, 420, 520, 720, 1020).

3. The method as claimed in claim 1 or 2, wherein each of the plurality of cut first tabs (542, 740, 1040) comprises a breaking portion (536) that is cut to separate the plurality of bus bars (340, 420, 520, 720, 1020) and the circuit board (350, 410, 510, 710, 1010) from each other.

4. The method as claimed in claim 3, wherein the breaking portion (536) is located between the first circuit board and the plurality of bus bars (340, 420, 520, 720, 1020) before being cut.

5. The method as claimed in claim 3 or 4, wherein the breaking portion (536) comprises a breaking hole (538).

6. The method as claimed in any one of claims 1 to 5, wherein a cut surface of each of the plurality of cut first tabs (542, 740, 1040) is coated for protection.

7. The method as claimed in any one of claims 1 to 6, wherein each of the plurality of first tabs (542, 740, 1040) comprises a first through hole (744),
each of the plurality of second tabs (544, 750, 1050) comprises a second through hole (754),
each of the plurality of bus bars (340, 420, 520, 720, 1020) comprises a third through hole (724), and
the connecting of the plurality of second tabs (544, 750, 1050) to the plurality of bus bars (340, 420, 520, 720, 1020) comprises:
fastening a fastening member (760) through the first through hole (744), the second through hole (754), and the third through hole (724) to connect the plurality of second tabs (544, 750, 1050) to the plurality of bus bars (340, 420, 520, 720, 1020).

8. The method as claimed in claim 7, wherein the fastening member (760) comprises:
a head portion (762); and
a protruding portion (764) protruding from the head portion (762) and inserted into the first through hole (744), the second through hole (754), and the third through hole (724), and
a diameter of the head portion (762) is smaller than a width of each of the second tabs (544, 750, 1050).

9. The method as claimed in claim 7 or 8, wherein the fastening member (760) comprises a conductive material.

10. The method as claimed in any one of claims 1 to 9, wherein each of the plurality of bus bars (340, 420, 520, 720, 1020) comprises a fixing groove (422, 722) fixing end portions of a corresponding one of the plurality of first tabs (542, 740, 1040) and a corresponding one of the plurality of second tabs (544, 750, 1050).

11. The method as claimed in claim 10, wherein one end of each of the plurality of second tabs (544, 750, 1050) is connected to the second circuit board (710, 1010), and
the connecting of the plurality of second tabs (544, 750, 1050) to the plurality of bus bars (340, 420, 520, 720, 1020) comprises inserting another end of each of the plurality of second tabs (544, 750, 1050) into the fixing groove (422) of a corresponding one of the plurality of bus bars (340, 420, 520, 720, 1020).

12. The method as claimed in claim 11, wherein the other end of each of the plurality of second tabs (544, 750, 1050) is bent and inserted into the fixing groove (422) of the corresponding one of the plurality of bus bars (340, 420, 520, 720, 1020).

13. The method as claimed in any one of claims 1 to 12, wherein at least some of the plurality of first tabs (542, 740, 1040) or the plurality of second tabs (544, 750, 1050) comprise nickel tabs.

14. The method as claimed in any one of claims 1 to 13, wherein the connecting of the plurality of second tabs (544, 750, 1050) to the plurality of bus bars (340, 420, 520, 720, 1020) comprises:
electrically connecting each of the plurality of second tabs (544, 750, 1050) to an upper surface of a corresponding one of the plurality of cut first tabs (542, 740, 1040).

15. A battery assembly (300) comprising:
a plurality of battery cells (10, 310);
a plurality of bus bars (340, 420, 520, 720, 1020) electrically connecting the plurality of battery cells (10, 310) to each other;
a circuit board (350, 410, 510, 710, 1010) electrically connected to the plurality of bus bars (340, 420, 520, 720, 1020);
a plurality of first tabs (542, 740, 1040) on the plurality of bus bars (340, 420, 520, 720, 1020) in a thickness direction; and
a plurality of second tabs (544, 750, 1050) on the plurality of first tabs (542, 740, 1040) in the thickness direction, and connecting the plurality of bus bars (340, 420, 520, 720, 1020) and the circuit board (350, 410, 510, 710, 1010) to each other.
